# EUROPÄISCHE PATENTSCHRIFT

(11) **EP 2 353 767 B1**
(45) Veröffentlichungstag und Bekanntmachung des Hinweises auf die Patenterteilung: **18.06.2014**
(21) Anmeldenummer: 10007650.4
(22) Anmeldetag: 23.07.2010
(51) Int. Cl.: B23K 11/093, B23K 11/26, B23K 13/04, B23K 11/24

(54) **Verfahren und Vorrichtung zur Herstellung von Röhrenradiatoren**
Method and apparatus for manufacturing tubular radiators
Procédé et dispositif de fabrication de radiateurs tubulaires

(30) Priorität: 15.01.2010 DE 102010004621
(43) Veröffentlichungstag der Anmeldung: 10.08.2011
(73) Patentinhaber: Zehnder Verkaufs- und Verwaltungs AG, 5722 Gränichen (CH)
(72) Erfinder: Roth, Hubert, 77767 Appenweier (DE)
(74) Vertreter: Stenger, Watzke & Ring

(56) Entgegenhaltungen:
- BE-A- 386 435
- DE-C1- 10 215 454
- DE-U- 7 311 571
- US-A1- 2006 006 148

## Beschreibung

Die vorliegende Erfindung betrifft ein Verfahren zur Herstellung von Röhrenradiatoren.

Röhrenradiatoren sind dem Grunde nach bekannt. Es handelt sich dabei um Radiatoren, bei denen eine Baugruppe aus einem oberen und einem unteren Kopfstück besteht, die mittels Rohren miteinander verbunden sind. Zu diesem Zweck haben die Kopfstücke Rohranschlussstutzen. Die Kopfstücke ihrerseits haben quer zu den Rohranschlussstutzen liegend Anschlussbereiche, um Kopfstücke untereinander zu verbinden und auf diese Weise Gruppen von beschriebenen Elementen zu bilden. Eine solche Gruppe bildet dann den Heizkörper an sich, der noch um Zuleitungen, Ventile, Stopfen und dergleichen komplettiert wird.

Es ist ganz offensichtlich, dass der Herstellungsvorgang derartiger Bauelemente vergleichsweise kompliziert ist. Zunächst müssen die Kopfstücke vorgefertigt werden, was durch das Zusammenschweißen von Halbschalen erfolgt. Dabei ist zu beachten, dass einmal der Anschlussflansch zum benachbarten Kopfstück beziehungsweise den benachbarten Kopfstücken einerseits und die Rohranschlussstutzen andererseits richtig zueinander ausgerichtet sind. Dann sind zwei Kopfstücke spiegelverkehrt zueinander zu positionieren und mittels der Rohre zu verbinden. Die dadurch entstehende Baugruppe bestehend aus zwei Kopfstücken und Verbindungsrohren muss eineindeutig definiert sein, da ansonsten die Verwendung dieser Baugruppe parallel angeschlossen an andere identische Baugruppen nicht zu einem befriedigenden Heizkörper führt. Die Rohre müssen eine exakte Länge haben, um beidseitig am jeweiligen Kopfstück eine eindeutige Verbindung zu garantieren. Darüber hinaus muss die Verbindung zwischen den Rohren und den Kopfstücken 100% dicht ausgeführt sein, da ansonsten das gesamte Endprodukt gefährdet ist.

Im Stand der Technik wird üblicherweise Abbrennstumpfschweißen an dieser Stelle durchgeführt, was eine sichere Verbindung garantiert. Laserschweißverbindungen sind sauberer, aber mit höherem technischem Aufwand durchzuführen. Die bekannten Schweißverfahren setzen der Automatisierung Grenzen, denn ein Laser muss 360° das Rohr umlaufen können, beim Abbrennstumpfschweißen sind viele Nacharbeiten erforderlich. Des weiteren ist im Stand der Technik die Anwendung des Widerstandsschweißens zur Herstellung von Röhrenradiatoren bekannt, siehe BE 386 435 A.

Ausgehend vom vorbeschriebenen Stand der Technik liegt der vorliegenden Erfindung die **Aufgabe** zugrunde, ein Verfahren zur Herstellung von Röhrenradiatoren bereitzustellen, welches insbesondere einen hohen Automatisierungsgrad ermöglicht und die industrielle Reproduzierbarkeit von entsprechenden Arbeitsergebnissen gewährleistet.

Zur technischen **Lösung** dieser Aufgabe wird ein Verfahren zur Herstellung von Röhrenradiatoren mit den Merkmalen den Patentanspruches 1 vorgeschlagen. Weitere Vorteile und Merkmale ergeben sich aus den Unteransprüchen.

Gemäß dem erfindungsgemäßen Vorschlag werden die Kopfstücke und Rohre vorbereitet, positioniert, in der Endposition gehalten und mittels Mittelfrequenz-Widerstandsschweißen verbunden. Durch dieses Verfahren wird der Fertigungsvorgang extrem automatisierbar und im zeitlichen Ablauf stark verkürzt. Die reine Schweißzeit nach dem Mittelfrequenz-Widerstandsschweißen liegt unter 100 ms. Bevorzugterweise wird eine Schweißzeit von unter 80 ms, noch mehr bevorzugt von unter 70 ms eingestellt. Eine Schweißzeit von ca. 60 ms ist bevorzugt.

Aufgrund dieser im Unterschied zum Stand der Technik sehr kurzen Schweißzeit kann eine vergleichsweise kurze Zykluszeit von unter 5 Sekunden, vorzugsweise von unter 4,5 Sekunden, noch mehr bevorzugt von unter 4 Sekunden realisiert werden. Innerhalb dieser Zykluszeit werden sämtliche Bewegungen zur Ein- und Ausbringung der zu verschweißenden Teile, deren genauen Positionierung zwecks Verschweißung sowie der eigentliche Verschweißungsvorgang durchgeführt.

Die Zuführung der jeweils zwei Kopfstücke und der dazwischen anzuordnenden Rohre erfolgt automatisch. Eine entsprechende Vielzahl von Rohren kann gleichzeitig mit den

Kopfstücken verschweißt werden. Dabei ist in erfindungsgemäßer Weise vorteilhaft vorgesehen, dass jede einzelne Schweißstelle bezüglich des Schweißstromes separat regelbar ist, so dass Unter- und/oder Überversorgungen mit elektrischer Energie beim Schweißvorgang und den damit verbundenen Folgen unkorrekter Schweißnähte verhindert werden.

Vor der Zuführung zur Schweißmaschine werden die Rohre automatisch abgelängt und angefast, wobei die sich ergebende Länge automatisch gemessen wird. Außerhalb der Toleranz liegende Rohre werden aussortiert.

Bei den Kopfstücken werden ebenfalls die Rohransätze oder Rohrstutzen beschnitten, gerundet, kalibriert und angefast. In vorteilhafter Weise wird mittels eines 3D-Messverfahrens vor der Zuführung zur Verschweißung das Kopfstück vermessen. Auch hier werden außerhalb der Toleranz liegende Element aussortiert.

Bei der Vorpositionierung werden die Kopfstücke und die Rohre auf einem Schlitten positioniert und automatisch auf die Schweißachse ausgerichtet. Die Positionierung wird über den gesamten Schweißvorgang aufrecht erhalten. Wenn die Baugrößen der Baugruppen es erforderlich machen, beispielsweise sehr kleine Bauhöhen oder dergleichen, können zusätzliche Halteelemente, beispielsweise in Form von Federpaketen und dergleichen, verwendet werden.

Es erfolgt dann eine definierte Flächenpressung von Rohren und Kopfstücken. Die Genauigkeit kann zwischen 8/10 mm bis 3/10 mm liegen. Die Ausrichtungsgenauigkeit liegt bei etwa 1/10 mm.

Um im Schweißmoment den hohen Stromstoß, der bis zu 27 kVA betragen kann, gegenüber dem Netz abzufangen, wird eine dynamische Kompensation verwendet. Zur Kompensation kommen Stromzwischenspeicher zum Einsatz, wie zum Beispiel Kondensatoren.

Es kann gemäß einer Ausführungsform der Erfindung vorgesehen sein, dass pro Schweißstelle ein Strom von 25 kA bei 9V fließt. Bei 12 Schweißstellen ergibt dies insgesamt 27 kVA. Diese Leistung führt zu einem extremen Spannungseinbruch im Netz, ähnlich wie dies bei dem Kurzschluss der Fall ist. Die nach der Erfindung vorgesehene dynamische Kompensation kann dies innerhalb einer Zeit von unter 5 ms kompensieren. Im Anschluss an eine solche Kompensation bedarf es der Wiederaufladung, was innerhalb von ca. 800 ms erfolgt. Eine solche Kompensation ermöglicht es, bis zu drei Schweißanlagen gleichzeitig zu versorgen, dass heißt kompensieren zu können, vorausgesetzt natürlich, dass die Anlagen entsprechend synchronisiert sind.

Die Schweißphase dauert vorzugsweise nur 60 ms bei einer Belastung von 1 t. Direkt im Anschluss an die Schweißphase wird die Belastung aufgehoben, um eine Verformung des Schweißgutes zu vermeiden.

Das erfindungsgemäße Verfahren hat sich bereits für Rohrstärken von 0,8 mm bis 1,2 mm bewährt.

Mit der Erfindung wird ein einfach umsetzbares Verfahren bereitgestellt, welches einen hohen Automatisierungsgrad und reproduzierbare industrielle Fertigungsergebnisse gewährleistet.

Das nach dem erfindungsgemäßen Verfahren hergestellte Schweißprodukt kann im Anschluss an die erfindungsgemäße Herstellung beispielsweise durch Schleifen nachbearbeitet und anschließend lackiert werden. Dabei unterscheidet sich das nach dem erfindungsgemäßen Verfahren hergestellte Schweißprodukt von einem solchen, das nach einem herkömmlichen Schweißverfahren, wie zum Beispiel dem Kondensatorentladungsschweißverfahren hergestellt worden ist durch eine etwas größere sichtbare Wärmezone. Die Gratbildung kann mit der erfindungsgemäßen Verfahrensdurchführung etwas verkleinert werden. Im Übrigen lassen sich Schweißspritzer und/oder sichtbare Versatze weitestgehend vermeiden.

Mit der Erfindung wird desweiteren eine Schweißvorrichtung mit den Merkmalen des Anspruchs 6 zur Durchführung des erfindungsgemäßen Verfahrens vorgeschlagen.

Die Schweißvorrichtung nach der Erfindung stellt wenigstens zwei Schweißstellen für das Mittelfrequenz-Widerstandsschweißen bereit. Dabei sind diese wenigstens zwei Schweißstellen gleichzeitig betreibbar, wobei jede Schweißstelle separat regelbar ist. Im Ergebnis gestattet die Schweißvorrichtung die Durchführung des erfindungsgemäßen Schweißverfahrens, wonach an wenigstens zwei Schweißstellen gleichzeitig ein Mittelfrequenz-Widerstandsschweißvorgang durchgeführt werden kann, und zwar derart, dass bezüglich einer jeden Schweißstelle eine separate Regelung hinsichtlich des Mittelfrequenz-Widerstandsschweißens durchgeführt werden kann.

Es ist vorrichtungsseitig desweiteren vorgesehen, dass jede Schweißstelle an einen eigenen Stromkreis angeschlossen ist. Dies vereinfacht die Regelung für eine jede Schweißstelle, wobei mehrere Schweißstellen gleichzeitig und unabhängig voneinander geregelt, dass heißt bestromt werden können. Es sind bevorzugterweise insgesamt zwölf Schweißstellen vorgesehen, in welchem Fall die erfindungsgemäße Schweißvorrichtung über zwölf voneinander getrennte und separat bedienbare Stromkreise verfügt, dass heißt für jede Schweißstelle einen Stromkreis. Über diese Stromkreise lässt sich mittels zweier servogeregelter Schweißschlitten synchron der gesamte Schweißvorgang abwickeln.

Die erfindungsgemäße Schweißvorrichtung verfügt über wenigstens einen Stromschienenblock, der seinerseits eine Mehrzahl von elektrisch voneinander getrennten Stromschienen aufweist, wobei jede Stromschiene eine Elektrode trägt. Es sind bevorzugterweise je Stromschienenblock sechs Stromschienen und somit sechs Elektroden vorgesehen.

Die Stromschienen eines Stromschienenblocks sind mechanisch miteinander gekoppelt, dass heißt stabil verbunden, und dies bei gleichzeitig elektrischer Trennung. Dabei sind die Stromschienen als solche derart robust ausgebildet, dass sie die Schließkräfte eines Niederhalters auch nach einer Mehrzahl von Arbeitszyklen sicher aufnehmen können, ohne dass es zu schnell zu verschleißbedingten Ungenauigkeiten kommt.

Die Schweißvorrichtung verfügt über eine Mehrzahl von Stromschienenblöcken der vorgenannten Art, wobei beispielsweise acht Stromschienenblöcke vorgesehen sein können.

Weitere Merkmale und Vorteile der Erfindung ergeben sich aus der nachfolgenden Beschreibung anhand der Figuren. Dabei zeigen
- Figur 1:: Explosivdarstellung der erfindungsgemäßen Schweißvorrichtung;
- Figur 2:: Draufsicht auf einen erfindungsgemäßen Röhrenradiator im endmontierten Zustand;

- Figur 3:: Längsschnitt durch die erfindungsgemäße Schweißvorrichtung in Schweiß-position;
- Figur 4:: Kopfstück und Rohr mit Elektroden in Schweißstellung, in perspektivischer Darstellung;

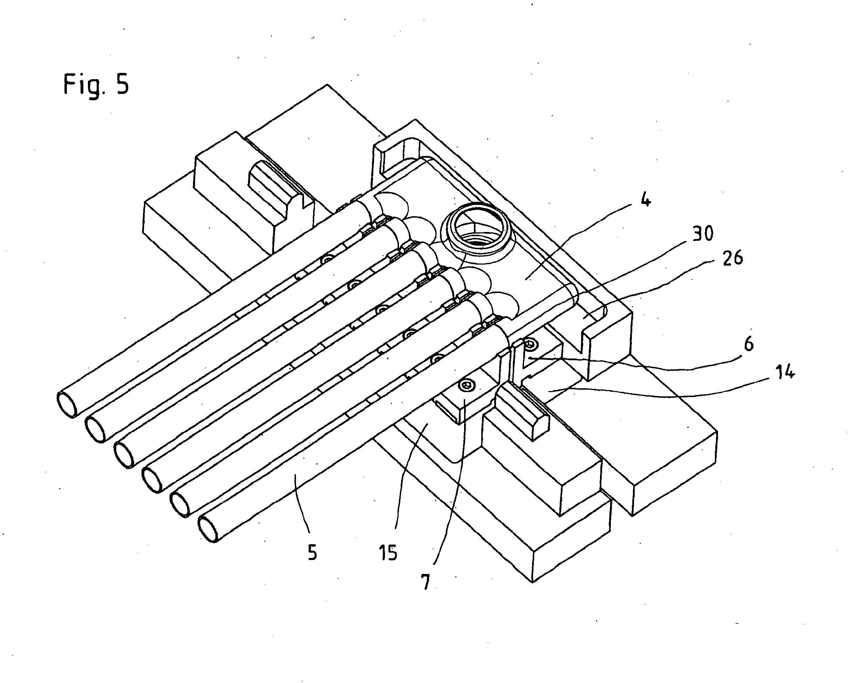

- Figur 5:: Kopfstück und Rohr in Schweißvorrichtung in Ausrichtposition in perspektivischer Darstellung;

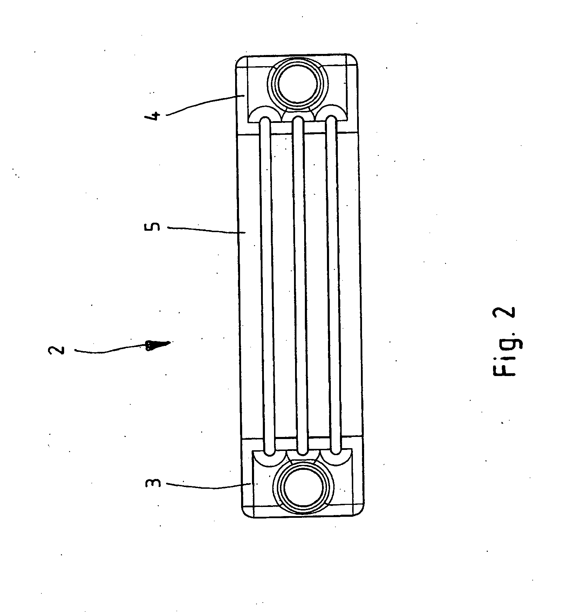

Figur 2 zeigt einen nach dem erfindungsgemäßen Verfahren hergestellten Röhrenradiator 2. Dieser besteht aus vier parallelen Rohren 5, welche endseitig jeweils mit einem Kopfstück 3, 4 verschweißt sind. Der Röhrenradiator 2 könnte dabei auch eine andere Anzahl von parallelen Rohren 5 aufweisen, je nach Konfiguration der erfindungsgemäßen Schweißvorrichtung 1.

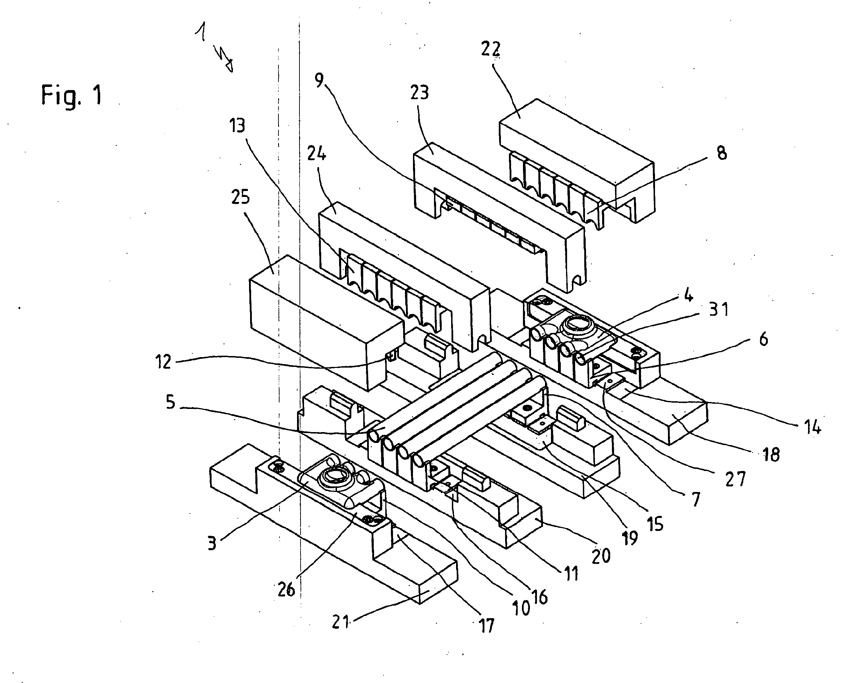

Figur 1 zeigt die erfindungsgemäße Schweißvorrichtung 1 in Explosivdarstellung. Die Schweißvorrichtung 1 weist dabei acht Stromschienenblöcke 18, 19, 20, 21, 22, 23, 24, 25 auf. Der Aufbau eines Stromschienenblocks 18 wird im Folgenden exemplarisch beschrieben:

Der Stromschienen block 18 weist sechs Stromschienen 27 auf. Diese sind parallel zueinander angeordnet. Alle Stromschienen 27 sind durch eine Isolierung 14 elektrisch voneinander getrennt. Die Stromschienen 27 eines Stromschienenblocks sind mechanisch derart fest miteinander gekoppelt, so dass die relative Lage der einzelnen Stromschienen zueinander auch bei den durch den Schweißvorgang auftretenden Belastungen erhalten bleibt. Somit ist gleichzeitig eine stabile Anordnung der Stromschienen 27 und eine elektrische Trennung der Stromschienen voneinander gewährleistet.

Die Stromschienen 27 dienen der sicheren Aufnahme von Elektroden 6, wobei jede Stromschiene 27 eine Elektrode 6 aufnehmen kann. Weiterhin ist jede montierte Elektrode 6 mechanisch derart fest mit der jeweiligen Stromschiene 27 verbunden, so dass die Elektroden auch bei den durch den Schweißvorgang auftretenden Belastungen ihre Position relativ zur Stromschiene beibehalten. Zwischen jeder Stromschiene 27 und darauf montierter Elektrode 6 besteht eine elektrisch leitende Verbindung. Die Anzahl der auf einem Stromschienenblock 18 montierten Elektroden 6 hängt dabei von der Bauart des zu schweißenden Röhrenradiators 2, das heißt der Anzahl der parallelen Rohre 5, ab.

In einer ersten Ebene der Schweißvorrichtung 1 sind vier Stromschienenblöcke 18, 19, 20, 21 angeordnet. Zwei Stromschienenblöcke 18, 21 tragen je ein Kopfstück 3, 4, und zwei Stromschienenblöcke 19, 20 tragen ein Rohr 5. Vier zu den vorgenannten Stromschienenblöcken korrespondierende Stromschienenblöcke 22, 23, 24, 25 dienen in einer Schweißposition als Kopfstück-Niederhalter 22, 25 bzw. Rohr-Niederhalter 23, 24. Diese vier korrespondierenden Stromschienenblöcke 22, 23, 24, 25 sind in einer Ebene parallel zur Ebene der übrigen vier Stromschienenblöcke 18, 19, 20, 21 angeordnet.

Die Stromschienenblöcke 18, 21, 22, 25, welche die Kopfstücke 3, 4 tragen, sind als Schlitten ausgebildet. Dies bedeutet, dass diese Stromschienenblöcke 18, 21, 22, 25 in axialer Richtung des Rohrs 5 verfahrbar sind.

Der Schweißvorgang geht wie folgt von statten:

Die Kopfstücke 3, 4 werden jeweils vollautomatisch in eine zur Kontur der Kopfstücke 3,4 korrespondierende Negativkontur eingelegt, welche von den Stromschienenblöcken 18, 21 bereitgestellt wird. Im Bereich der Rohransätze 31 liegen die Kopfstücke 3, 4 dabei halbumfänglich auf Elektroden 6, 10 auf.

Zwei weitere Stromschienenblöcke 19, 20, welche in der gleichen Ebene wie die Stromschienenblöcke 18, 21, welche die Kopfstücke 3, 4 aufnehmen, angeordnet sind, stellen halbumfängliche Aufnahmen an den Elektroden 7, 11 bereit. In diese Elektroden 7, 11 werden vollautomatisch Rohre 5 eingelegt.

Auf die Stromschienenblöcke 18, 19, 20, 21 werden die jeweils korrespondierenden Stromschienenblöcke 22, 23, 24, 25 vollautomatisch verfahren, wobei im endverfahrenen Zustand die jeweils zueinander korrespondierenden Stromschienenblöcke mit ihren Elektroden vollumfänglich jeweils Rohrabschnitt 31 bzw. Rohr 5 umschließen.

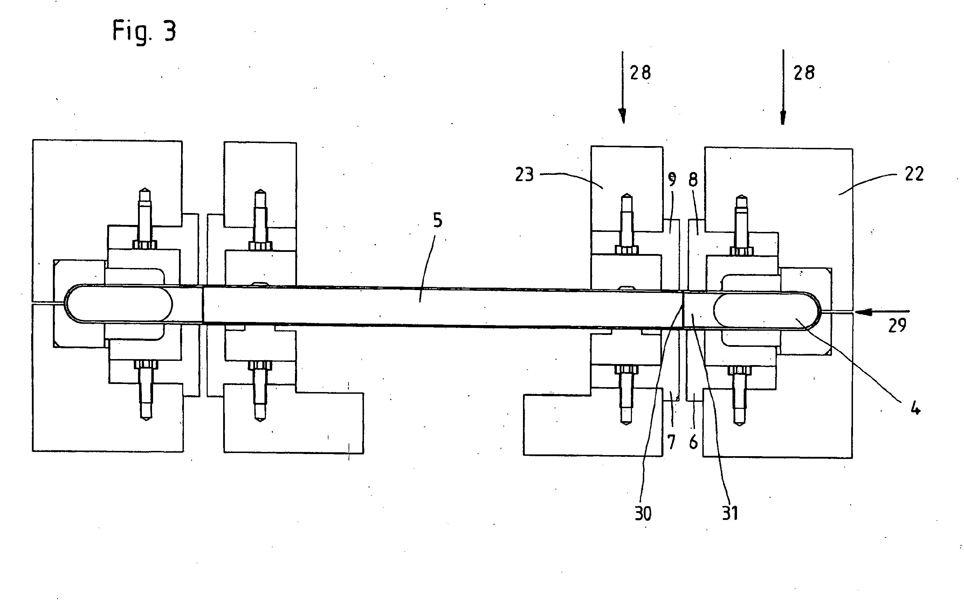

Figur 3 zeigt das Schweißverfahren im Längsschnitt durch die Schweißvorrichtung 1. Die Elektroden 8, 9 werden durch entsprechende Kräfte 28 auf die korrespondierenden Elektroden 6, 7 gedrückt. Mit einer definierten Schweißkraft 29 in axialer Richtung eines Rohrs 5 wird das Kopfstück 4 mit dem Rohransatz 31 an das Rohr 5 gefügt. Die jeweils zwei ein Kopfstück 3,4 aufnehmenden Stromschienenblöcke 18,21 sind dabei synchronisiert und servogeregelt in axialer Richtung eines Rohrs 5 verfahrbar. Ferner sind die Elektrodenkraft 28 und die Schweißkraft 29 getrennt voneinander einstellbar. Rohr 5 und Kopfstück bilden am Fügeort die Schweißstelle 30.

Während des Schweißvorgangs liegt der Schweißstrom zwischen negativer Rohrelektrode 7, 9 und positiver Kopfstückelektrode 6, 8 im Bereich der Schweißstelle 30 an. Kopfstück 4 und Rohre 5 werden miteinander verschweißt. Jede Schweißstelle 30 weist dabei vier Elektroden 6, 7, 8, 9, zwei Trafos und einen Inverter bzw. Leistungsteil auf. Dabei ist der Schweißstrom an jeder einzelnen der bis zu sechs Elektroden eines Stromschienenblocks getrennt voneinander regelbar.

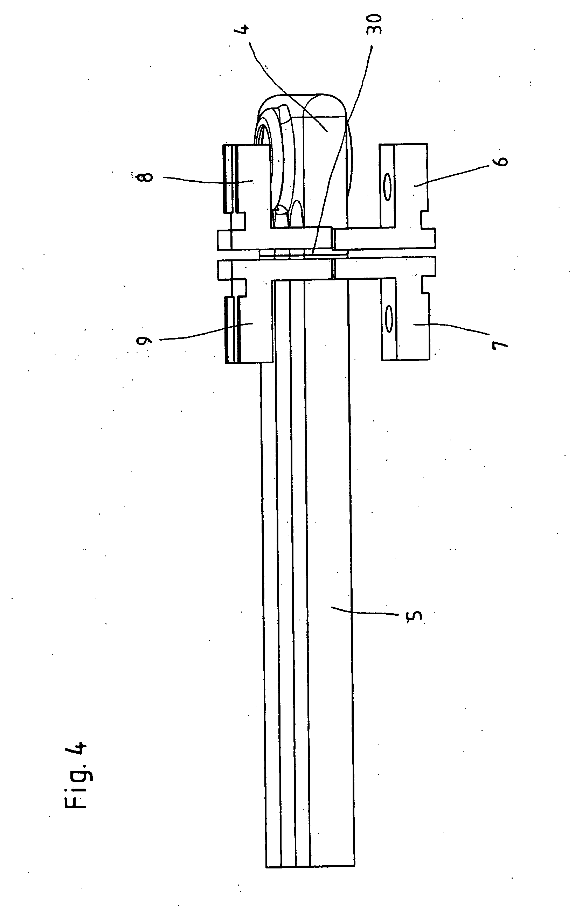

Die Figur 4 zeigt Kopfteil 4 und Rohre 5 in der Schweißstellung. In der perspektivischen Darstellung ist zu erkennen, dass mehrere Rohre 5 gleichzeitig mit dem Kopfstück 4 verschweißt werden. An jeder Schweißstelle 30 sind dabei vier Elektroden 6, 7, 8, 9 angeordnet. Der Strom an jeder Schweißstelle 30 ist dabei einzeln regelbar.

### Bezugszeichenliste

- 1: Schweißvorrichtung
- 2: Röhrenradiator
- 3: Kopfstück
- 4: Kopfstück
- 5: Rohr
- 6: Elektrode
- 7: Elektrode
- 8: Elektrode
- 9: Elektrode
- 10: Elektrode
- 11: Elektrode
- 12: Elektrode
- 13: Elektrode
- 14: elektrische Trennung
- 15: elektrische Trennung
- 16: elektrische Trennung
- 17: elektrische Trennung
- 18: Stromschienenblock
- 19: Stromschienenblock
- 20: Stromschienenblock
- 21: Stromschienenblock
- 22: Stromschienenblock
- 23: Stromschienenblock
- 24: Stromschienenblock
- 25: Stromschienenblock
- 26: Schlitten
- 27: Stromschiene
- 28: Elektrodenkraft
- 29: Schweißkraft
- 30: Schweißstelle
- 31: Rohransatz

## Patentansprüche

1. Verfahren zur Herstellung von Röhrenradiatoren (2) bestehend aus Kopfstücken (3, 4) und an diesen anzuordnenden Rohren (5),
**dadurch gekennzeichnet,**
**dass** wenigstens ein Kopfstück (3, 4) und eine Mehrzahl von Rohren (5) vorbereitet, positioniert und in der vorgesehenen Endposition gehalten und mittels Mittelfrequenz-Widerstandsschweißen verbunden werden, wobei die Mehrzahl von Rohren (5) gleichzeitig mit dem wenigstens einen Kopfstück (3, 4) verschweißt wird und wobei das Mittelfrequenz-Widerstandsschweißen an jeder Schweißstelle (30) separat geregelt wird.

2. Verfahren nach Anspruch 1, **dadurch gekennzeichnet, dass** die Rohre (5) bei der Vorbereitung automatisch vermessen werden.

3. Verfahren nach einem der vorhergehenden Ansprüche, **dadurch gekennzeichnet, dass** Rohransätze (31) der Kopfstücke (3, 4) hinsichtlich Länge, Rundheit, Durchmesser automatisch vermessen werden.

4. Verfahren nach Anspruch 3, **dadurch gekennzeichnet, dass** die Kopfstücke (3, 4) mit einem 3D-Messverfahren automatisch vermessen werden.

5. Verfahren nach einem der vorhergehenden Ansprüche, **dadurch gekennzeichnet, dass** dieses durch einen Zentralrechner gesteuert wird.

6. Schweißvorrichtung (1) zur Durchführung des Verfahrens nach einem der vorhergehenden Ansprüche 1 bis 5, mit wenigstens einem Stromschienenblock (18) zur Aufnahme eines Kopfstückes (3, 4) und mit wenigstens einem Stromschienenblock (19) zur Aufnahme einer Mehrzahl von Rohren (5), und mit wenigstens zwei zu den Stromschienenblöcken (18, 19) korrespondierend ausgebildeten Stromschienenblöcken (22, 23),
**dadurch gekennzeichnet,**
**dass** die Schweißvorrichtung (1) über eine Mehrzahl separat regelbarer Stromkreise zur gleichzeitigen Verschweißung der Mehrzahl von Rohren (5) mit dem Kopfstück (3, 4) verfügt, zu welchem Zweck jeder Stromschienenblock (18, 19, 22, 23) eine Mehrzahl elektrisch voneinander getrennter Stromschienen (27) aufweist, wobei jede Stromschiene (27) eines Stromschienenblockes (18, 22) eine positive Kopfstückelektrode (6, 8) trägt, und wobei jede Stromschiene (27) eines Stromschienenblockes (19, 23) eine negative Rohrelektrode (7, 9) trägt, wobei jeweils zwei negative Rohrelektroden (7, 9) und jeweils zwei positive Kopfstückelektroden (6, 8) einen separat regelbaren Stromkreis ausbilden.

7. Schweißvorrichtung (1) nach Anspruch 6, mit einer Mehrzahl von Stromschienenblöcken (18).

## Claims

1. A method for manufacturing tube radiators (2) composed of head pieces (3, 4) and tubes (5) to be mounted thereon,
**characterized in that**
at least one head piece (3, 4) and a plurality of tubes (5) are prepared, positioned and held in the provided end position and are connected by means of mid-frequency resistance welding, wherein the plurality of tubes (5) is simultaneously welded to the at least one head piece (3, 4) and wherein the mid-frequency resistance welding is controlled separately at each weld (30).

2. A method according to claim 1, **characterized in that** the tubes (5) are automatically measured during the preparation.

3. A method according to one of the preceding claims, **characterized in that** the tube sockets (31) of the head piece (3, 4) are automatically measured with respect to the length, roundness, diameter.

4. A method according to claim 3, **characterized in that** the head pieces (3, 4) are automatically measured by means of a 3D measurement method.

5. A method according to one of the preceding claims, **characterized in that** this one is controlled by a central computer.

6. A welding device (1) for carrying out the method according to one of the preceding claims 1 through 5, comprising at least one bus bar block (18) for receiving a head piece (3, 4) and at least one bus bar block (19) for receiving a plurality of tubes (5), and comprising at least two bus bar blocks (22, 23) that are designed correspondingly to the bus bar blocks (18, 19), **characterized in that** the welding device comprises a plurality of separately controllable electric circuits for simultaneously welding the plurality of tubs (5) to the head piece (3, 4), for which purpose each bus bar block (18, 19, 22, 23) comprises a plurality of bus bars (27) which are electrically separated from each other, wherein each bus bar (27) of a bus bar block (18, 22) carries a positive head piece electrode (6, 8) and wherein each bus bar (27) of a bus bar block (19, 23) carries a negative tube electrode (7, 9), wherein respectively two negative tube electrodes (7, 9) and respectively two positive head piece electrodes (6, 8) form a separately controllable electric circuit.

7. A welding device (1) according to claim 6, comprising a plurality of bus bar blocks (18).

## Revendications

1. Procédé de fabrication des radiateurs tubulaires (2) composés de pièces de tête (3, 4) et de tubes (5) qui sont à disposer sur celles-ci,
**caractérisé en ce qu'**
au moins une pièce de tête (3, 4) et une pluralité de tubes (5) sont préparées, positionnées et retenues dans la position finale prévue et sont reliées par moyen de soudage par résistance à fréquence moyenne, dans lequel la pluralité de tubes (5) est simultanément soudée à l'au moins une pièce de tête (3, 4) et dans lequel le soudage par résistance à fréquence moyenne est réglé séparément à chaque point de soudure (30).

2. Procédé selon la revendication 1, **caractérisé en ce que** les tubes (5) sont automatiquement mesurés lors de la préparation.

3. Procédé selon l'une des revendications précédentes, **caractérisé en ce que** des embouts de tuyau (31) des pièces de tête (3, 4) sont mesurés automatiquement par rapport à la longueur, à la rondeur et au diamètre.

4. Procédé selon la revendication 3, **caractérisé en ce que** les pièces de tête (3, 4) sont mesurées automatiquement à l'aide d'une méthode de mesure tridimensionnelle.

5. Procédé selon l'une des revendications précédentes, **caractérisé en ce que** celui-ci est commandé par un ordinateur central.

6. Dispositif de soudage (1) destiné à l'exécution du procédé selon l'une des revendications précédentes 1 à 5, comprenant au moins un bloc à rails conducteurs (18) pour recevoir une pièce de tête (3, 4) et au moins un bloc à rails conducteurs (19) pour recevoir une pluralité de tubes (5), et comprenant au moins deux blocs à rails conducteurs (22, 23) qui sont configurés de manière correspondante aux blocs à rails conducteurs (18, 19), dans lequel le dispositif de soudage (1) possède une pluralité de circuits électriques qui sont réglables séparément pour simultanément souder la pluralité de tubes (5) à la pièce de tête (3, 4), à quelle fin chaque bloc à rails conducteurs (18, 19, 22, 23) comprend une pluralité de rails conducteurs (27) séparés les uns des autres, chaque rail conducteur (27) d'un bloc à rails conducteurs (18, 22) portant une électrode de pièce de tête (6, 8) positive et chaque rail conducteur (27) d'un bloc à rails conducteurs (19, 23) portant une électrode de tube négative (7, 9), respectivement deux électrodes de tube négatives (7, 9) et respectivement deux électrodes de pièce de tête (6, 8) positives formant un circuit électrique qui est réglable séparément.

7. Dispositif de soudage (1) selon la revendication 6, comprenant une pluralité de blocs à rails conducteurs (18).
